# EUROPEAN PATENT SPECIFICATION

(11) **EP 0 692 789 B1**
(45) Date of publication and mention of the grant of the patent: **20.06.2001**
(21) Application number: 95304944.2
(22) Date of filing: 14.07.1995
(51) Int. Cl.: G11B 23/087, G11B 23/113

(54) **A reel lock mechanism for locking tape reels and a method of assembling such a reel lock mechanism**
Spulenverriegelungsmechanismus für Bandspulen und Verfahren zu dessen Zusammenbau
Mécanisme pour le blocage de bobines à bande magnétique et procédé pour son assemblage

(30) Priority: 15.07.1994 JP 16431294
(43) Date of publication of application: 17.01.1996
(73) Proprietor: SONY CORPORATION, Tokyo (JP)
(72) Inventor: Taguchi, Osamu, c/o Intellectual Property Division, Shinagawa-ku, Tokyo 141 (JP)
(74) Representative: Boden, Keith McMurray

(56) References cited:
- EP-A- 0 169 514
- EP-A- 0 580 355
- EP-A- 0 616 326
- DE-A- 3 337 854
- GB-A- 2 099 400

## Description

The invention relates to a tape cassette having a reel lock mechanism in which a pair of tape reels accommodated within a cassette housing can be prevented from being rotated by engagement between ratchet wheels formed on outer peripheral portions of the tape reels and a ratchet when a tape cassette is not in use and to a method of assembling such a reel lock mechanism.

Tape cassettes for use with video recording and/or reproducing apparatus, such as a video cassette recorder (VCR) and an 8-mm video cassette recorder (8-mm VCR), include a reel lock mechanism for preventing a rotation of a pair of tape reels having a magnetic tape wound thereon when they are not in use.

A reel lock mechanism is generally composed of a reel lock body, a pair of reel lock ratchets, a ratchet spreading spring and a slide spring. The reel lock body can be moved close to or away from a pair of supply-reel and take-up reel under spring force of the slide spring. The reel lock body includes at its right and left portions a pair of reel lock ratchets pivotally supported thereto. The pair of reel lock ratchets are opened outward under spring force of the ratchet spreading spring and ratchet portions formed at the tip ends of the reel lock ratchets are meshed with the ratchets formed on the outer peripheral portions of the pair of reels.

In the above-mentioned tape cassette, the ratchet spreading springs for spreading the pair of reel lock ratchets have two coil portions. Therefore, when the reel lock mechanism having such shaped ratchet spreading spring is assembled, the following two assembly methods are proposed.

A first assembly method encounters the problem that, because the ratchet spreading spring has the two coil portions, initially, only one coil portion is attached to a shaft portion of one reel lock ratchet by twisting an arm of the coil portion. Then, under the condition that the arm of the coil portion which has been attached to the shaft portion of one reel lock ratchet can be prevented from being disengaged from the shaft portion, the other coil portion is attached to a shaft portion of the other reel lock ratchet by twisting an arm of the other coil portion. During assembly, those who assemble the tape cassettes have to do two kinds of operations at the same time. Therefore, if those who assemble the tape cassettes were not skilful, the ratchet spreading spring would not be attached to the shaft portion of the reel lock ratchet. Therefore, the assembly of the tape cassette constitutes skilful work.

A second assembly method encounters the problem that, initially, the two coil portions of the ratchet spreading spring are inserted into the shaft portions of the right and left reel lock ratchets. Then, the right and left arms are respectively engaged with spring engagement ribs under twisting force. If a tape cassette is small, then assemblies thereof also are small and hence the arms of the ratchet spreading spring are not long enough to be picked up when the arms are engaged with the spring engagement ribs. As a result, a working property in the assembly is not satisfactory.

Patent Specification EP-A-580 355 discloses a tape cassette with a sliding reel lock body mounting reel lock ratchets with tops which can engage teeth on tape reels of the cassette and a spring which is mounted on a support on the reel lock body and has arms which bias the reel lock ratchets into engagement with the reels.

According to one aspect of the present invention, there is provided a tape cassette having a reel lock mechanism comprising:
a reel lock body which can be moved in the front and back direction with respect to a pair of tape reels on which end portions of a magnetic tape are wound;
a pair of reel lock ratchets supported on said reel lock body so as each to be rotatable about a respective supporting shaft and having ratchet portions formed at tip ends thereof; and
a ratchet spreading spring having ratchet spreading arms biasing said ratchet portions towards said pair of reels under spring force so that said ratchet portions become meshed with ratchet wheels formed around outer peripheral portions of said tape reels,
characterised in that said ratchet spreading spring includes supporting portions supported on shaft portions of said pair of reel lock ratchets, said pair of reel lock ratchets include ratchet-side stoppers and said reel lock body includes body-side stoppers which, after said reel lock ratchets have been rotated from positions outside a normal range of positions into said normal range, can engage said ratchet-side stoppers to limit the extent of angular movement of the reel lock ratchets to within said normal range.

According to another aspect of the present invention, there is provided a method of assembling a tape cassette including a reel lock mechanism, comprising the steps of:
pivotally supporting a pair of reel lock ratchets on a pair of rotary shafts provided on a reel lock body which can be moved in the front and rear direction relative to a pair of reels on which respective ends of a magnetic tape are wound; and
mounting a ratchet spreading spring to cause ratchet portions at the tip ends of the reel lock ratchets to be meshed with ratchet wheels formed on outer peripheral portions of said pair of reels;
characterised in that the ratchet portions formed at the tip ends are initially open wider than a normal range; and
said pair of reel lock ratchets are rotated into said normal range simultaneously to urge ratchet-side stoppers provided on said reel lock ratchets to move over body-side stoppers provided on said reel lock body, so that thereafter although said ratchet arms of said ratchet spreading spring spring-bias said ratchet portions of said pair of reel lock ratchets outwardly, said ratchet portions are held within said normal range by engagement of said ratchet-side stoppers with said body-side stoppers.

The invention is diagrammatically illustrated by way of example in the accompanying drawings, in which:-
FIG. 1 is a plan view showing a reel lock mechanism for tape reels according to an embodiment of the present invention;
FIG. 2 is a perspective view showing the reel lock mechanism for tape reels according to the embodiment of the present invention in an exploded fashion;
FIG. 3 is a rear view thereof;
FIG. 4 is a side view thereof;
FIG. 5 is a left-hand side view used to explain an action of the present invention and the state that a ratchet spreading spring is attached;
FIG. 6 is a left-hand side view used to explain the state that a ratchet-side stopper is brought in contact with a body-side stopper by rotating a reel lock ratchet;
FIG. 7 is a left-hand side view used to explain the state that the ratchet-side stopper is moved over the body- side stopper by rotating the reel lock ratchet;
FIG. 8 is a perspective view showing an overall arrangement of a tape cassette with its front lid being closed to which the present invention is applied; and
FIG. 9 is a perspective view showing an overall arrangement of a tape cassette with its front lid being opened to which the present invention is applied.

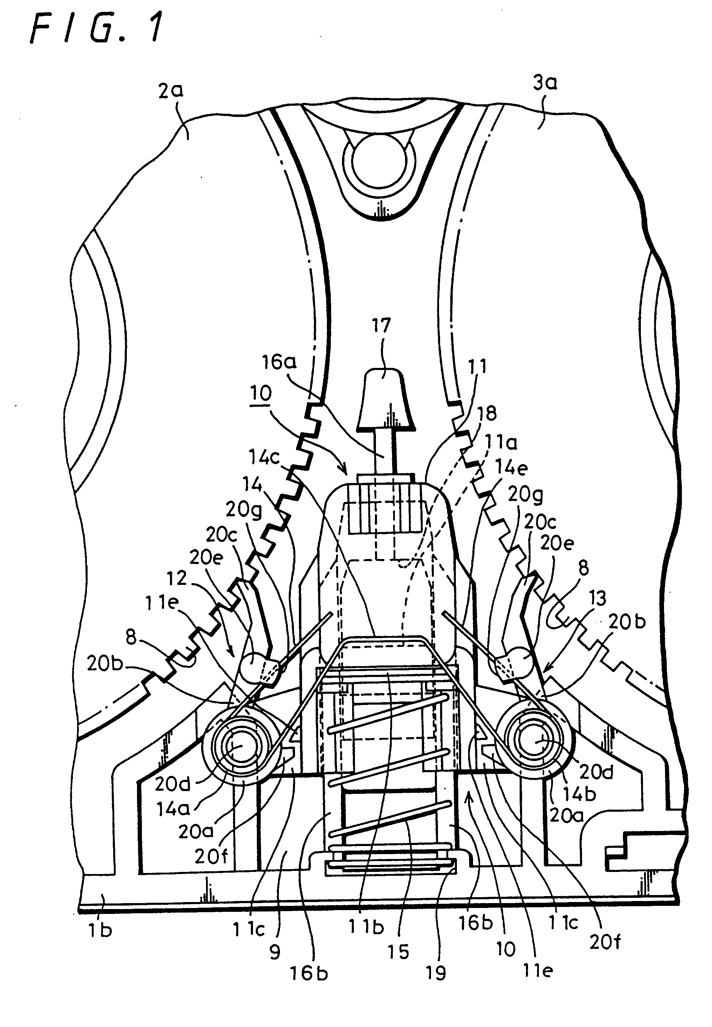

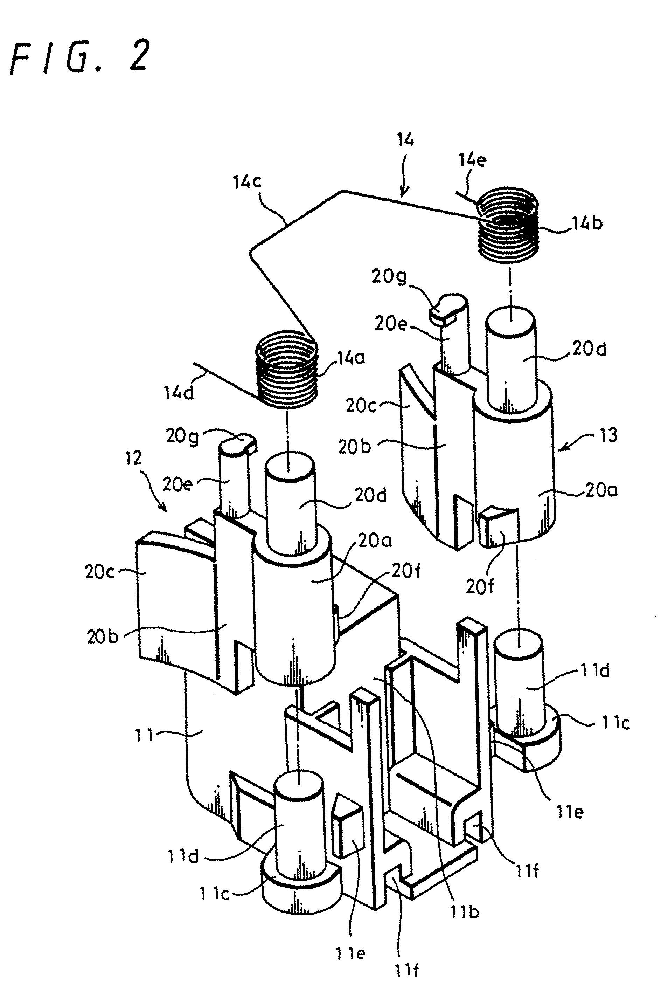

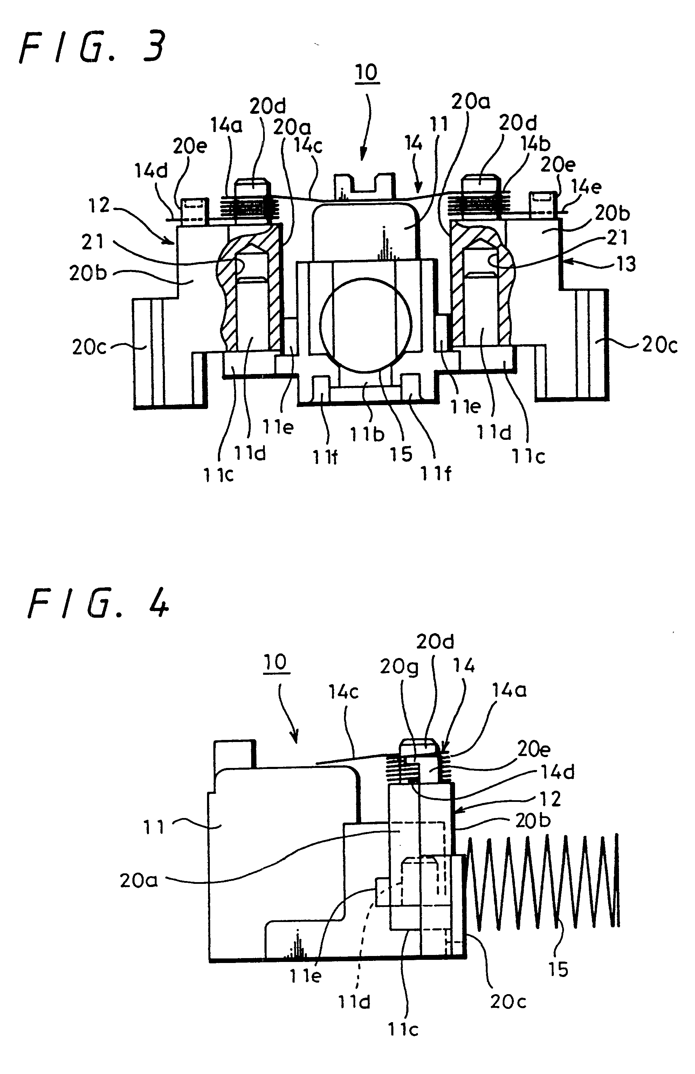

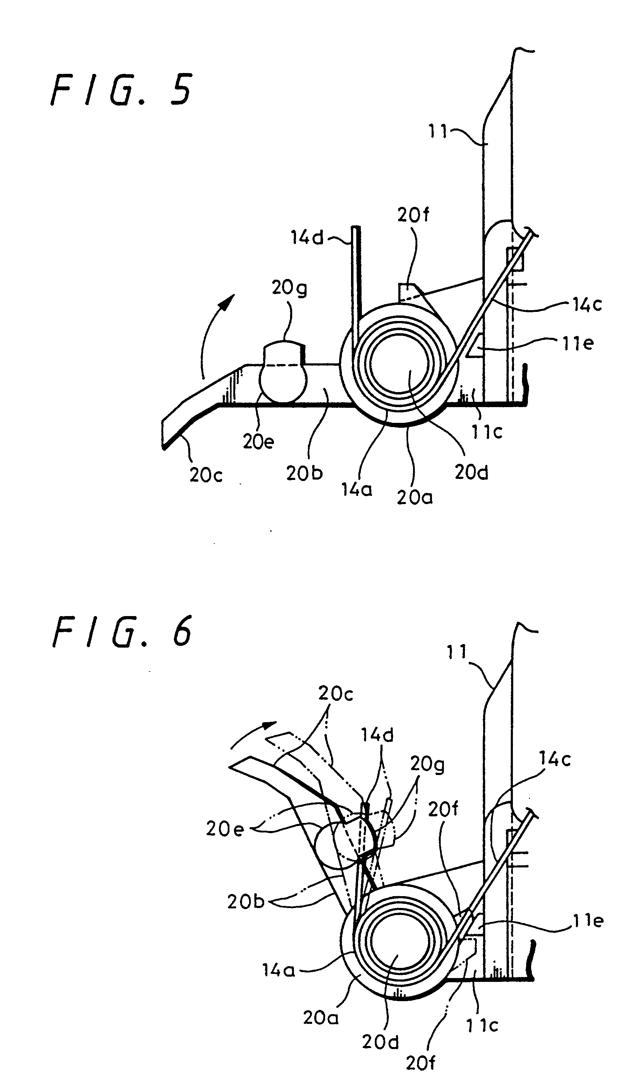

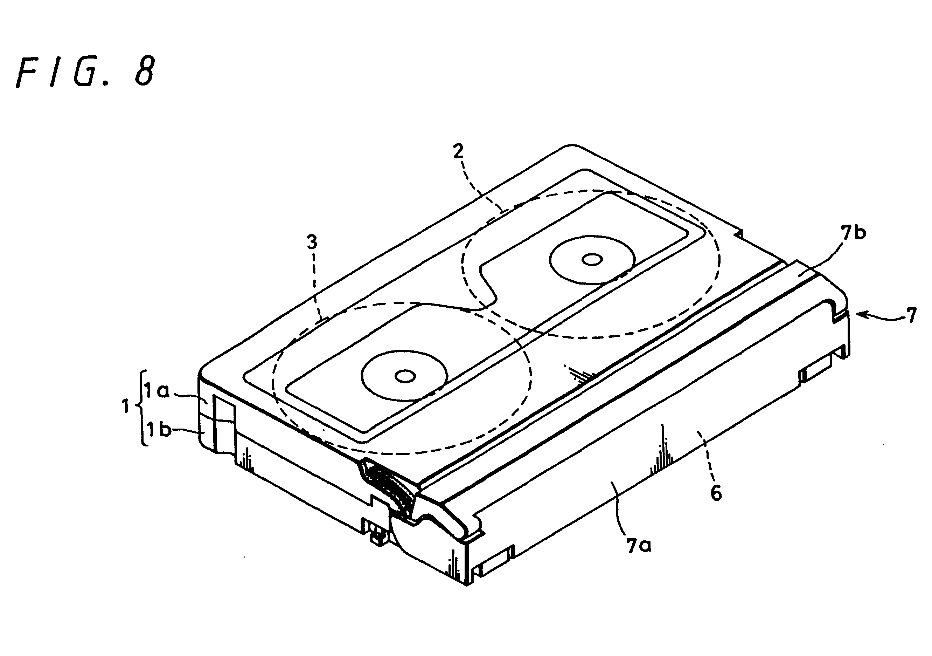

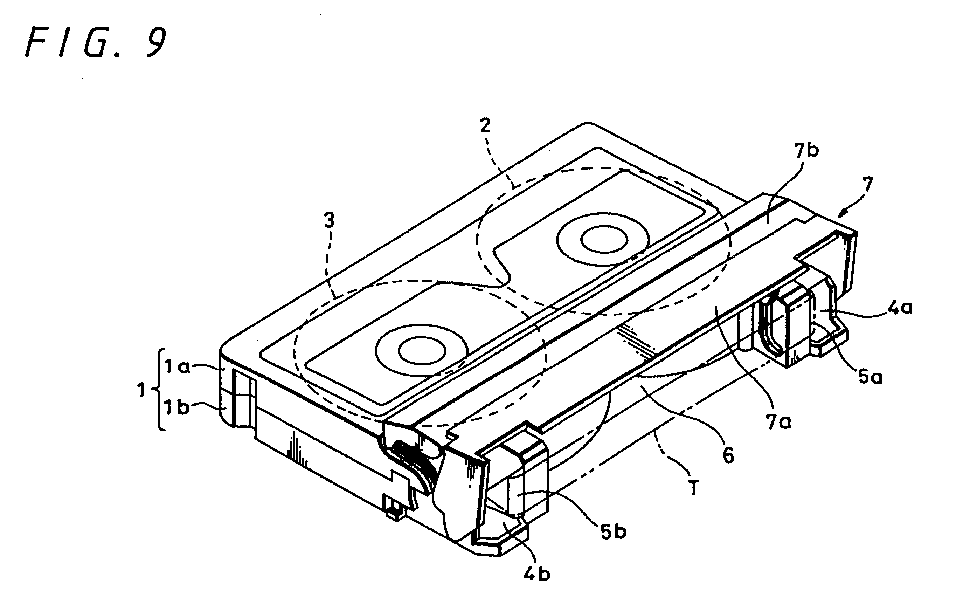

Referring to the drawings, FIGS. 1 to 9 show an embodiment of the present invention, wherein FIG. 1 is a plan view showing a reel lock mechanism accommodated within a tape cassette; FIGS. 2 to 4 are diagrams showing only the reel lock mechanism; FIGS. 5 to 7 are diagrams used to explain an operation of the reel lock mechanism; and FIGS. 8 and 9 are diagrams showing an example of a reel lock mechanism applied to an audio tape cassette.

As shown in FIGS. 8 and 9, a tape cassette includes a cassette housing 1 made of a synthetic resin having a proper rigidity, such as PP (polypropylene), ABS (acrylonitrile butadiene styrene) and HIPS (high-impact polystyrene). The cassette housing 1 is composed of an upper cassette shell (half) la and a lower cassette shell (half) 1b joined by some suitable means.

The cassette housing 1 accommodates a supply-reel 2 and a take-up reel 3 such that the supply-reel 2 and the take- up reel 3 can become freely rotatable. One end of a magnetic tape T serving as a recording medium is wound around the supply-reel 2 and the other end of the magnetic tape T is wound around the take-up reel 3. The magnetic tape T supplied from the supply-reel 2 is transported along a mouth portion 6 formed on the front portion of the cassette housing 1 through a tape guide 5a provided within one opening portion 4a and wrapped around the take-up reel 3 through a tape guide 5b provided within the other opening portion 4b.

The cassette housing 1 has on its front portion attached a lid 7 which can close and/or open the mouth portion 6 and the right and left opening portions 4a, 4b. When the lid 7 is closed, the lid 7 covers and protects the magnetic tape T extended along the front surface of the cassette housing 1. The lid 7 is composed of three lids, i.e., a front lid 7a covering the front surface of the magnetic tape T, a top lid 7b covering the upper surface of the magnetic tape T and a back lid (not shown) covering the rear surface of the magnetic tape T.

A pair of tape reels rotatably accommodated within the cassette housing 1, i.e., the supply-reel 2 and the take- up reel 3 are composed of lower flanges 2a, 3a having unitary reel hubs (not shown) and upper flanges (not shown) provided in parallel to the lower flanges 2a, 3a across the reel hubs. The lower flanges 2a, 3a have on their outer peripheral edges formed ratchet wheels 8. As shown in FIG. 1, the cassette housing 1 houses a reel lock accommodating portion 9 provided on its central rear surface side. The reel lock accommodating portion 9 includes a reel lock mechanism 10 disposed therein such that the reel lock mechanism 10 can be move in the front and rear directions of the cassette housing 1, i.e., the reel lock mechanism 10 can be moved back and forth with respect to the tangents of the two tape reels 2, 3.

The reel lock mechanism 10 is composed of a reel lock body 11, a pair of reel lock ratchets 12, 13 and a ratchet spreading spring 14 as shown in FIGS. 1 to 4. As illustrated, the reel lock body 11 is composed of a slide operation portion 11a opened to the lower surface, a spring holding portion 11b for engaging and holding a front end portion of a slide spring 15 which spring-biases the reel lock body 11 forward, a pair of bracket portions 11c, 11c projected toward the left and right portions thereof and a pair of rotary shafts 11d, 11d projected upward from the bracket portions 11c, 11c. The reel lock body 11 has on its side surface body-side stoppers 11e, 11e disposed so as to oppose the rotary shafts 11d, 11d.

The reel lock body 11 has on its lower surface formed a plurality of guide slits 11f, 11f extended in the front and back direction. These guide slits 11f, 11f are slidably engaged with guide rails 16a, 16b formed on the lower cassette shell 1b, whereby the reel lock body 11 can be moved straight in the front and back direction.

A stopper 17 is provided at the tip end portion of the central guide rail 16a to limit forward movement of the reel lock body 11. The lower cassette shell 1b has an operation window 18 defined from the rear end of the guide rail 16a to the rear surface side to move the reel lock body 11 in the front and back direction. The slide operation portion 11a of the reel lock body 11 is opposed to the operation window 18 so that, when this tape cassette is loaded onto an audio mechanical deck (not shown), a release pin (not shown) of the mechanical deck is inserted into the slide operation portion 11a of the reel lock body 11 through the operation window 18. When the release pin of the mechanical deck is inserted into the slide operation portion 11a, the reel lock body 11 is moved backward to release the locked state of the reel lock mechanism 10.

A front end portion of the slide spring 15 formed as a compression spring is engaged with and held at the spring holding portion 11b of the reel lock body 11. A rear end portion of the slide spring 15 is engaged with and held at a spring holding portion 19 provided on the lower cassette shell 1b. Under spring force of the slide spring 15, the reel lock body 11 is constantly biased forward so as to approach the pair of supply-reel 2 and take-up reel 3.

As shown in FIG. 2, the above-mentioned ratchet spreading spring 14 is composed of a pair of coil portions 14a, 14b showing a specific example of supporting portions and each of which has turns of windings, a coupling arm 14c coupled to one end of each of the coil portions 14a, 14b to couple the two coil portions 14a, 14b and ratchet spreading arms 14d, 14e coupled to the other end of each of the coil portions 14a, 14b. The two coil portions 14a, 14b are wound in opposite directions (the right-hand side coil portion 14a is wound in the clockwise direction and the left-hand side coil portion 14b is wound in the counter-clockwise direction in FIG. 1 in this embodiment) so as to generate spring forces in the opposite directions.

Specifically, the two coil portions 14a, 14b are coupled at their upper ends by the coupling arm 14c and the coupling arm 14c is shaped in U-letter so as to project forward. The pair of ratchet spreading arms 14d, 14e project forward at the lower ends of the two coil portions 14a, 14b. A spacing between the two coil portions 14a and 14b is set to be substantially equal to a spacing between the pair of rotary shafts 11d, 11d of the reel lock body 11.

The pair of reel lock ratchets 12, 13 are composed of cylindrical shaft portions 20a, 20a having engagement apertures 21, 21 which are rotatably fitted onto the rotary shafts 11d, 11d of the reel lock body 11, arm portions 20b, 20b elongated from the side portions of the cylindrical shaft portions 20a, 20a, ratchet portions 20c, 20c coupled to the tip end portions of the arm portions 20b, 20b, shaft portions 20d, 20d projected from the upper ends of the cylindrical shaft portions 20a, 20a, spring engagement ribs 20e, 20e projected from the upper ends of the arm portions 20b, 20b and ratchet-side stoppers 20f, 20f projected from the inside surfaces of the cylindrical shaft portions 20a, 20a.

The shaft portions 20d, 20d of the reel lock ratchets 12, 13 have axes to become concentric with center lines of the engagement apertures of the cylindrical shaft portions 20a, 20a. Further, the ratchet-side stoppers 20f, 20f are formed on the reel lock ratchets 12, 13 at the positions of substantially right angle to the arm portions 20b, 20b. Overhang portions 20g, 20g are formed on the upper ends of the spring engagement ribs 20e, 20e in order to prevent the ratchet spreading arms 14d, 14e from being disengaged from the shaft portions 20d, 20d.

The reel lock mechanism 10 thus arranged can be easily assembled as shown in FIGS. 5 to 7 as follows. Since assembly operations of the left and right reel lock ratchets 12, 13 become symmetrical with each other, the right-hand side half need not be described with reference to FIGS. 5 to 7 and only the left- hand side half will be described below.

The engagement apertures 21 of the reel lock ratchets 12, 13 attached to the corresponding sides are respectively fitted into the left and right rotary shafts 11d, 11d of the reel lock body 11 thereby pivotally to support the pair of reel lock ratchets 12, 13 to the respective ends of the reel lock body 11. In this case, the pair of reel lock ratchets 12, 13 are assembled such that the ratchet portions 20c, 20c are directed toward the outside, i.e., the left-hand side reel lock ratchet 12 is assembled to the left-hand side of the reel lock body 11 and that the right-hand side reel lock ratchet 13 is assembled to the right-hand side of the reel lock body 11, respectively.

Then, as shown in FIG. 5, under the condition that the ratchet portions 20c, 20c of the reel lock ratchets 12, 13 are directed outside, the two coil portions 14a, 14b of the ratchet spreading spring 14 are fitted onto the shaft portions 20d, 20d of the two reel lock ratchets 12, 13 from the side of the ratchet spreading arms 14d, 14e. In this case, the tip end portion of the coupling arm 14c of the ratchet spreading spring 14 is placed on the upper surface of the reel lock body 11. Further, since the spacing between the left and right shaft portions 20d, 20d is the same as that provided between the two coil portions 14a and 14b, the ratchet spreading spring 14 can be fitted into the reel lock ratchets 12, 13 in the free state, i.e., without applying a twisting force to the two coil portions 14a, 14b.

Subsequently, as shown in FIG. 5, the arm portion 20b and the ratchet portion 20c are rotated forward about the rotary shaft lid such that the left and right reel lock ratchets 12, 13 are simultaneously held up from the front side of the reel lock body 11. Specifically, the left-hand side reel lock ratchet 12 shown in FIG. 5 is rotated in the clockwise direction and the right-hand side reel lock ratchet 13, not shown, is rotated in the counter-clockwise direction.

When the reel lock ratchet 12 is rotated as described above, as shown in FIG. 6, the spring engagement rib 20e formed on the arm portion 20b contacts with the ratchet spreading arm 14d (14e) of the ratchet spreading spring 14. Then, when the reel lock ratchet 12 is further rotated in this state, the coil portion 14a (14b) is twisted in accordance with an increase of a rotated amount of the reel lock ratchet 12 and the spring-biasing force of the ratchet spreading arm 14d (14e) increases. Then, when the reel lock ratchet 12 is rotated with a predetermined amount after the spring engagement rib 20e has contacted with the ratchet spreading arm 14d (14e), the rear surface of the ratchet-side stopper 20f formed on the inside of the cylindrical shaft portion 20a contacts with the front surface of the body-side stopper lie formed on the side surface of the reel lock body 11.

In this state, if the reel lock ratchet 12 is further rotated by application of a pressing force, then the two stoppers lie, 20f and the rotary shaft lid are twisted so that the ratchet-side stopper 20f is moved in the rear surface side beyond the body-side stopper 11e as shown by a two-dot chain line in FIG. 6. In this case, since the rear surface of the ratchet-side stopper 20f and the front surface of the body-side stopper lie are tapered, the ratchet-side stopper 20f can be easily moved over the body-side stopper 11e.

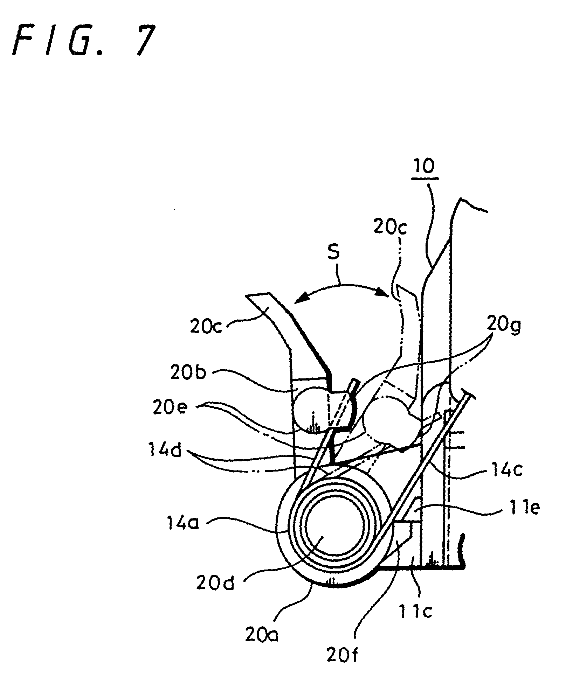

Then, when the rotational force of the left and right reel lock ratchets 12, 13 is removed, the reel lock ratchets 12, 13 are rotated in the opposite direction by the spring-biasing force of the ratchet spreading arm 14d (14e) to urge the front surface of the ratchet-side stopper 20f to contact with the rear surface of the body-side stopper 11e. When the ratchet-side stopper 20f and the body-side stopper lie are engaged with each other, the ratchet spreading spring 14 generates a spring force and the ratchet spreading arms 14d, 14e provided at the respective ends of the spring 14 bias the ratchet portions 20c, 20c to the outside under spring force. The spring-biasing force of the ratchet spreading arm 14d (14e) is not so strong enough to cause the ratchet-side stopper 20f to move beyond the body-side stopper 11e. Therefore, the pair of reel lock ratchets 12, 13 can be prevented from being rotated in the returning direction by the engagement between the two stoppers lie and 20f. Thus, the pair of reel lock ratchets 12, 13 are held in the state shown in FIG. 7.

Thus, the assembly of the reel lock mechanism 10 according to this embodiment is finished. Accordingly, the assembly of the reel lock mechanism 10 can be finished simply by rotating the two reel lock ratchets 12, 13 in the inside after the ratchet spreading spring 14 has been placed on the left and right reel lock ratchets 12, 13 inserted into the reel lock body 11. Therefore, the reel lock mechanism 10 can be assembled very easily.

In the reel lock mechanism 10 thus assembled, the ratchet portion 20c can be rotated in a range from the state that the ratchet-side stopper 20f and the body-side stopper lie are contacted with each other as shown by a solid line in FIG. 7 to the state that the ratchet portion 20c is pressed inwardly and brought in contact with the side surface of the reel lock body 11 as shown by a two-dot chain line in FIG. 7. This rotational range of the ratchet portion 20c corresponds to a range S in which the reel lock mechanism 10 can be used generally.

In this range S in which the reel lock mechanism 10 is in use, since the left and right reel lock ratchets 12, 13 are biased outwardly under spring-force of the ratchet spreading spring 14, the reel lock ratchets 12, 13 are rotated by application of an inward pressing force against the spring force of the ratchet spreading spring 14. As a consequence, the ratchet portions 20c, 20c are rotated inwardly in response to a magnitude of a force applied thereto.

When the reel lock mechanism 10 is accommodated within the reel lock accommodating portion 9 of the cassette housing 1, the left and right reel lock ratchets 12, 13 whose ratchet portions 20c are spread outwardly by the ratchet spreading spring 14 are biased forward under spring force of the slide spring 15, whereby the ratchet portions 20c, 20c of the left and right reel lock ratchets 12, 13 are meshed with the ratchet wheels 8, 8 formed on the outer peripheral portions of the supply-reel 2 and the take-up reel 3 to thereby prevent the supply-reel 2 and the take-up reel 3 from being rotated.

While the reel lock mechanism and the method of assembling this reel lock mechanism are so far applied to the audio tape cassette as described above, the present invention is not limited thereto and can be applied to a variety of tape cassettes using a magnetic tape as a recording medium, such as an 8-mm video tape cassette, a so-called VHS tape cassette or a so-called Beta tape cassette.

Thus the reel lock mechanism is composed of a reel lock body, a pair of reel lock ratchets and a ratchet spreading spring. The ratchet spreading spring is composed of supporting portions and ratchet spreading arms. The pair of reel lock ratchets include ratchet-side stoppers and the reel lock body includes body- side stoppers. When the ratchet-side stoppers are engaged with the body-side stoppers, the ratchet spreading spring generates a spring force to bias the pair of reel lock ratchets under spring force. Therefore, the ratchet spreading spring can be attached considerably easily. Thus, it is possible to provide a reel lock mechanism which can be assembled very easily and efficiently upon assembly.

In addition, since the length of the ratchet spreading arms of the ratchet spreading spring can be reduced to the extent that the ratchet spreading arms are not disengaged from the spring engagement rib of the reel lock ratchet, the length of wire material forming the ratchet spreading spring can be saved. Thus, the wire material can be utilized effectively.

Since the ratchet spreading spring has the supporting portions formed of two coil portions and the ratchet spreading arms are continuously connected to the other ends of the two coil portions, the ratchet spreading spring can be formed of a single member and the ratchet spreading spring can be attached to the reel lock body with ease. Moreover, the reel lock mechanism for locking tape reels can be obtained wherein the reel lock mechanism can be easily efficiently assembled.

Further, since a pair of reel lock ratchets are rotatably supported by a pair of rotary shafts which are supporting shafts of the reel lock body and a pair of ratchet spreading arms of the ratchet spreading spring are respectively engaged with the spring engagement ribs, ratchet portions of the pair of reel lock ratchets are reliably meshed with ratchet wheels formed on the outer peripheral portions of the pair of reels. Therefore, it is possible to obtain a reel lock mechanism for locking tape reels in which tape reels can be reliably locked by a simple arrangement.

Furthermore, after two coil portions are loosely engaged with a pair of reel lock ratchets engaged with a pair of rotary shafts of a reel lock body under the condition that the pair of reel lock ratchets are opened larger than a range in which the reel lock ratchets are generally in use, the pair of reel lock ratchets are rotated in the above-mentioned range and the ratchet-side stoppers are moved over the body-side stoppers. Then, when the ratchet-side stoppers and the body- side stoppers are engaged with one another, the pair of reel lock ratchets can be prevented from being rotated and the ratchet portions can be held in the above-mentioned range. Thus, the ratchet spreading spring can be assembled considerably easily. Therefore, it is possible to provide a method of assembling a reel lock mechanism for tape reels, which reel lock mechanism can be assembled with ease with a high productivity.

## Claims

1. A tape cassette having a reel lock mechanism comprising:
a reel lock body (11) which can be moved in the front and back direction with respect to a pair of tape reels (2, 3) on which end portions of a magnetic tape (T) are wound;
a pair of reel lock ratchets (12, 13) supported on said reel lock body (11) so as each to be rotatable about a respective supporting shaft (11d, 11d) and having ratchet portions (20c, 20c) formed at tip ends thereof; and
a ratchet spreading spring (14) having ratchet spreading arms (14d, 14e) biasing said ratchet portions (20c, 20c) towards said pair of reels under spring force so that said ratchet portions (20c, 20c) become meshed with ratchet wheels (8) formed around outer peripheral portions of said tape reels (2, 3),
characterised in that said ratchet spreading spring (14) includes supporting portions (14a, 14b) supported on shaft portions (20d, 20d) of said pair of reel lock ratchets (12, 13), said pair of reel lock ratchets (12, 13) include ratchet-side stoppers (20f, 20f) and said reel lock body (11) includes body-side stoppers (11e, 11e) which, after said reel lock ratchets (12, 13) have been rotated from positions outside a normal range of positions into said normal range, can engage said ratchet-side stoppers (20f, 20f) to limit the extent of angular movement of the reel lock ratchets (12, 13) to within said normal range.

2. A tape cassette according to claim 1, wherein when said ratchet-side stoppers (20f, 20f) and said body-side stoppers (lie, lie) are engaged with each other, said ratchet spreading spring (14) generates a spring force to bias said pair of reel lock ratchets (12, 13) under spring force.

3. A tape cassette according to claim 1, wherein said supporting portions of said ratchet spreading spring (14) are two coil portions (14a, 14b) supported on said shaft portions (20d, 20d) of said pair of reel lock ratchets (12, 13) and whose one ends are coupled together by a coupling arm (14), and said ratchet spreading arms (14d, 14e) of said ratchet spreading spring (14) are connected to the other ends of said two coil portions (14a, 14b).

4. A tape cassette according to claim 1, wherein said supporting shafts of said reel lock body are a pair of rotary shafts (11d, 11d) provided on said reel lock body (11), said pair of rotary shafts (11d, 11d) support said reel lock ratchets (12, 13) formed by a pair of different members pivotally supported thereon, said pair of reel lock ratchets (12, 13) include spring engagement ribs (20e, 20e), said pair of ratchet spreading arms (14d, 14e) are respectively engaged with the pair of spring engagement ribs (20e, 20e), and said pair of shaft portions (20d, 20d) separately support said supporting portions (14a, 14b) of said ratchet spreading spring (14).

5. A tape cassette according to claim 2, wherein said supporting portions of said ratchet spreading spring (14) are two coil portions (14a, 14b) supported on said shaft portions (20d, 20d) of said pair of reel lock ratchets (12, 13) and whose one ends are coupled together by a coupling arm (14) and said ratchet spreading arms (14d, 14e) of said ratchet spreading spring (14) are connected to the other ends of said two coil portions (14, 14b).

6. A tape cassette according to claim 5, wherein said supporting shafts of said reel lock body are a pair of rotary shafts (11d, 11d) provided on said reel lock body (11), reel lock ratchets (12, 13) formed of a pair of different members are pivotally supported on said pair of rotary shafts (11d, 11d), said pair of reel lock ratchets (12, 13) include spring engagement ribs (20e, 20e), said pair of ratchet spreading arms (14d, 14e) are respectively engaged with said pair of spring engagement ribs (20e, 20e), and said pair of shaft portions (20d, 20d) have said supporting portions (14a, 14b) of said ratchet spreading spring (14) separately supported thereon.

7. A tape cassette according to claim 6, wherein said spring (14) is a torsion coil spring.

8. A tape cassette according to claim 7, wherein said spring (14) is symmetrical with respect to a center line between said pair of reels (2, 3).

9. A method of assembling a tape cassette including a reel lock mechanism, comprising the steps of:
pivotally supporting a pair of reel lock ratchets (12, 13) on a pair of rotary shafts (11d, 11d) provided on a reel lock body (11) which can be moved in the front and rear direction relative to a pair of reels (2, 3) on which respective ends of a magnetic tape (T) are wound; and
mounting a ratchet spreading spring (4) to cause ratchet portions (20c, 20c) at the tip ends of the reel lock ratchets (12, 13) to be meshed with ratchet wheels (8) formed on outer peripheral portions (2a, 3a) of said pair of reels (2, 3);
characterised in that the ratchet portions (20c, 20c) formed at the tip ends are initially open wider than a normal range; and
said pair of reel lock ratchets (12, 13) are rotated into said normal range simultaneously to urge ratchet-side stoppers (20f, 20f) provided on said reel lock ratchets (12, 13) to move over body-side stoppers (11e, 11e) provided on said reel lock body (11), so that thereafter although said ratchet arms (14d, 14e) of said ratchet spreading spring spring-bias said ratchet portions (20c, 20c) of said pair of reel lock ratchets (12, 13) outwardly, said ratchet portions (20c, 20c) are held within said normal range by engagement of said ratchet-side stoppers (20f, 20f) with said body-side stoppers (11e, 11e).

## Patentansprüche

1. Bandkassette, die einen Spulenverriegelungsmechanismus aufweist, mit:
einem Spulenverriegelungskörper (11), der in der Vorwärts- und Rückwärtsrichtung in bezug auf zwei paarweise angeordnete Bandspulen (2, 3) bewegt werden kann, auf denen Endteile eines Magnetbands (T) gewickelt sind;
zwei paarweise angeordneten Spulenverriegelungsklinken (12, 13), die auf dem Spulenverriegelungskörper (11) so gelagert sind, daß sie um eine entsprechende Lagerwelle (11d, 11d) drehbar sind und Klinkenteile (20c, 20c) aufweisen, die an ihren Kopfenden gebildet sind; und
einer Klinkenspreizfeder (14), die Klinkenspreizarme (14d, 14e) hat, die die Klinkenteile (20c, 20c) in Richtung auf beiden Spulen unter Federkraft vorspannt, so daß die Klinkenteile (20c, 20c) mit den Klinkenrädern (8) in Eingriff kommen, die um äußere Umfangsteile der Bandspulen (2, 3) herum gebildet sind,
dadurch gekennzeichnet, daß die Klinkenspreizfeder (14) Lagerteile (14a, 14b) aufweist, die auf Wellenteilen (20d, 20d) der beiden paarweise angeordneten Spulenverriegelungsklinken (12, 13) gelagert sind, wobei die beiden Spulenverriegelungsklinken (12, 13) klinkenseitige Stopper (20f, 20f) aufweisen und der Spulenverriegelungskörper (11) körperseitige Stopper (11e, 11e) umfaßt, welche, nachdem die Spulenverriegelungsklinken (12, 13) von Positionen außerhalb eines Positions-Normalbereichs in den Normalbereich verdreht wurden, die klinkenseitigen Stopper (20f, 20f) erfassen können, um das Winkelbewegungsmaß der Spulenverriegelungsklinken (12, 13) auf den Normalbereich zu begrenzen.

2. Bandkassette nach Anspruch 1, wobei, wenn die klinkenseitigen Stopper (20f, 20f) und die körperseitigen Stopper (11e, 11e) sich einander erfassen, die Klinkenspreizfeder (14) eine Federkraft erzeugt, um die beiden Spulenverriegelungsklinken (12, 13) unter Federkraft vorzuspannen.

3. Bandkassette nach Anspruch 1, wobei die Lagerteile der Klinkenspreizfeder (14) zwei Spulenteile (14a, 14b) sind, die auf den Wellenteilen (20d, 20d) der beiden Spulenverriegelungsklinken (12, 13) gelagert sind und deren eine Enden miteinander durch einen Koppelarm (14c) gekoppelt sind, und die Klinkenspreizarme (14d, 14e) der Klinkenspreizfeder (14) mit den anderen Enden der beiden Spulenteile (14a, 14b) verbunden sind.

4. Bandkassette nach Anspruch 1, wobei die Lagerwellen des Spulenverriegelungskörpers zwei paarweise angeordnete Drehwellen (11d, 11d) sind, die auf dem Spulenverriegelungskörper (11) vorgesehen sind, wobei die beiden paarweise angeordneten Drehwellen (11d, 11d) die Spulenverriegelungsklinken (12, 13) lagern, die durch zwei paarweise angeordnete unterschiedliche Teile gebildet sind, die drehbar darauf gelagert sind, wobei die beiden paarweise angeordneten Spulenverriegelungsklinken (12, 13) Federeingriffsrippen (20e, 20e) aufweisen, wobei die beiden paarweise angeordneten Klinkenspreizarme (14d, 14e) mit den beiden Federeingriffsrippen (20e, 20e) in Eingriff stehen, und wobei die beiden paarweise angeordneten Wellenteile (20d, 20d) die Lagerteile (14a, 14b) der Klinkenspreizfeder (14) separat lagern.

5. Bandkassette nach Anspruch 2, wobei die Lagerteile der Klinkenspreizfeder (14) zwei Spulenteile (14a, 14b) sind, die auf den Wellenteilen (20d, 20d) der beiden paarweise angeordneten Spulenverriegelungsklinken (12, 13) gelagert sind, und deren eine Enden miteinander durch einen Koppelarm (14) gekoppelt sind und die Klinkenspreizarme (14d, 14e) der Klinkenspreizfeder (14) mit den anderen Enden der beiden Spulenteile (14a, 14b) gekoppelt sind.

6. Bandkassette nach Anspruch 5, wobei die Lagerwellen des Spulenverriegelungskörpers zwei paarweise angeordnete Drehwellen (11d, 11d) sind, die auf dem Spulenverriegelungskörper (11) vorgesehen sind, die Spulenverriegelungsklinken (12, 13), die aus den beiden unterschiedlichen Teilen gebildet sind, drehbar auf den beiden Drehwellen (11d, 11d) gelagert sind, die beiden Spulenverriegelungsklinken (12, 13) Federeingriffsrippen (20e, 20e) aufweisen, die beiden Klinkenspreizarme (14d, 14e) entsprechend mit den beiden Federeingriffsrippen (20e, 20e) in Eingriff stehen, und die beiden Wellenteile (20d, 20d) die Lagerteile (14, 14b) der Klinkenspreizfeder (14) aufweisen, die separat darauf gelagert sind.

7. Bandkassette nach Anspruch 6, wobei die Feder (14) eine Torsionsspulenfeder ist.

8. Bandkassette nach Anspruch 7, wobei die Feder (14) symmetrisch in bezug auf eine Mittellinie zwischen den beiden Spulen (2, 3) ist.

9. Verfahren zum Zusammenbau einer Bandkassette, die einen Spulenverriegelungsmechanismus aufweist, welches folgende Schritte umfaßt:
Drehbares Lagern von zwei paarweise angeordneten Spulenverriegelungsklinken (12, 13) auf zwei paarweise angeordneten Drehwellen (11d, 11d), die auf einem Spulenverriegelungskörper (11) vorgesehen sind, die in der Vorwärts- und Rückwärtsrichtung in bezug auf zwei paarweise angeordnete Spulen (2, 3) bewegt werden können, auf denen entsprechende Enden eines Magnetbandes (T) gewickelt sind; und
Befestigen einer Klinkenspreizfeder (4), um zu bewirken, daß Klinkenteile (20c, 20c) an den Kopfenden der Spulenverriegelungsklinken (12, 13) in Klinkenräder (8) eingreifen, die auf äußeren Umfangsteilen (2a, 3a) der beiden paarweise angeordneten Spulen (2, 3) gebildet sind;
dadurch gekennzeichnet, daß die Klinkenteile (20c, 20c), die an den Kopfenden gebildet sind, anfangs weiter öffnen als ein Normalbereich; und
die beiden Spulenverriegelungsklinken (12, 13) in den Normalbereich gedreht werden, um gleichzeitig die klinkenseitigen Stopper (20f, 20f), die auf den Spulenverriegelungsklinken (12, 13) vorgesehen sind, zu drücken, damit sie sich über körperseitige Stopper (11e, 11e) bewegen, die auf dem Spulenverriegelungskörper (11) vorgesehen sind, so daß danach, obwohl die Klinkenarme (14d, 14e) der Klinkenspreizfeder die Klinkenteile (20c, 20c) der beiden Spulenverriegelungsklinken (12, 13) nach außen hin feder-vorspannen, die Klinkenteile (20c, 20c) innerhalb des Normalbereichs durch Erfassen der klinkenseitigen Stopper (20f, 20f) mit den körperseitigen Stoppern (11e, 11e) gehalten werden.

## Revendications

1. Cassette de bande possédant un mécanisme de blocage de bobines, comprenant :
un corps (11) de blocage de bobines qui peut être déplacé dans la direction avant-arrière par rapport à une paire de bobines de bande (2, 3) sur lesquelles sont enroulées des parties d'extrémité d'une bande magnétique (T),
une paire de cliquets (12, 13) de blocage de bobine supportés sur le corps (11) de blocage de bobines afin qu'ils puissent tourner chacun autour d'un arbre respectif de support (11d, 11d) et ayant des parties d'encliquetage (20c, 20c) formées à leurs extrémités, et
un ressort (14) d'écartement de cliquets ayant des bras (14d, 14e) d'écartement de cliquet rappelant les parties d'encliquetage (20c, 20c) vers la paire de bobines sous l'action d'une force d'élasticité si bien que les parties d'encliquetage (20c, 20c) viennent en prise avec des roues d'encliquetage (8) formées autour des parties périphériques externes des bobines de bande (2, 3),
caractérisée en ce que le ressort (14) d'écartement de cliquets comprend des parties de support (14a, 14b) qui sont supportées par des parties d'arbre (20d, 20d) des deux cliquets (12, 13) de blocage de bobine, les deux cliquets (12, 13) de blocage de bobine comportent des organes d'arrêt (20f, 20f) du côté des cliquets et le corps (11) de blocage de bobines comprend des organes d'arrêt (11e, 11e) du côté du corps qui, après que les cliquets (12, 13) de blocage de bobine ont tourné depuis des positions qui sont en dehors de la plage normale de positions vers la plage normale, peuvent coopérer avec les organes d'arrêt (20f, 20f) du côté des cliquets pour limiter l'amplitude du déplacement angulaire des cliquets (12, 13) de blocage de bobine à la plage normale.

2. Cassette de bande selon la revendication 1, dans laquelle, lorsque les organes d'arrêt (20f, 20f) du côté des cliquets et les organes d'arrêt (11e, 11e) du côté du corps sont en prise mutuellement, le ressort (14) d'écartement de cliquets créent une force d'élasticité destinée à rappeler la paire de cliquets (12, 13) de blocage de bobine par une force d'élasticité.

3. Cassette de bande selon la revendication 1, dans laquelle les parties de support du ressort (14) d'écartement de cliquets sont deux parties enroulées (14a, 14b) supportées par les parties d'arbre (20d, 20d) des deux cliquets (12, 13) de blocage de bobine et dont les premières extrémités sont couplées mutuellement par un bras de couplage (14), et les bras (14d, 14e) d'écartement de cliquet du ressort (14) d'écartement de cliquets sont connectés aux autres extrémités des deux parties enroulées (14a, 14b).

4. Cassette de bande selon la revendication 1, dans laquelle les arbres de support du corps de blocage de bobines forment une paire d'arbres rotatifs (11d, 11d) placés sur le corps (11) de blocage de bobines, et la paire d'arbre rotatifs (11d, 11d) supporte les cliquets (12, 13) de blocage de bobine formés par une paire d'organes différents supportés de manière pivotante sur eux, la paire de cliquets (12, 13) de blocage de bobine comporte des nervures (20e, 20e) de coopération avec le ressort, la paire de bras (14d, 14e) d'écartement de cliquet sont en prise respectivement avec la paire de nervures (20e, 20e) de coopération avec le ressort, et les deux parties d'arbre (20d, 20d) supportent séparément les parties de support (14a, 14b) du ressort (14) d'écartement de cliquets.

5. Cassette de bande selon la revendication 2, dans laquelle les parties de support du ressort (14) d'écartement de cliquets sont deux parties enroulées (14a, 14b) supportées par les parties d'arbre (20d, 20d) de la paire de cliquets (12, 13) de blocage de bobine et dont les premières extrémités sont couplées mutuellement par un bras de couplage (14), et les bras (14d, 14e) d'écartement de cliquet du ressort (14) d'écartement de cliquets sont raccordés aux autres extrémités des deux parties enroulées (14, 14b).

6. Cassette de bande selon la revendication 5, dans laquelle les arbres de support du corps de blocage de bobines sont sous forme d'une paire d'arbres rotatifs (11d, 11d) disposés sur le corps (11) de blocage de bobines, les cliquets (12, 13) de blocage de bobine formés par une paire d'organes différents sont supportés de manière pivotante par la paire d'arbres rotatifs (11d, 11d), les deux cliquets (12, 13) de blocage de bobine comprennent des nervures (20e, 20e) de coopération avec le ressort, les deux bras (14d, 14e) d'écartement de cliquet sont en prise respectivement avec les deux nervures (20e, 20e) de coopération avec le ressort, et les deux parties d'arbre (20d, 20d) ont des parties de support (14a, 14b) du ressort (14) d'écartement de cliquets qui sont supportées séparément.

7. Cassette de bande selon la revendication 6, dans laquelle le ressort (14) est un ressort enroulé de torsion.

8. Cassette de bande selon la revendication 7, dans laquelle le ressort (14) est symétrique par rapport à un axe central passant entre les deux bobines (2, 3).

9. Procédé d'assemblage d'une cassette de bande comprenant un mécanisme de blocage de bobines, comportant les étapes suivantes :
le support pivotant de deux cliquets (12, 13) de blocage de bobine sur deux arbres rotatifs (11d, 11d) placés sur un corps (11) de blocage de bobines qui peut être déplacé dans la direction avant-arrière par rapport à une paire de bobines (2, 3) sur lesquelles sont enroulées des extrémités respectives d'une bande magnétique (T), et
le montage d'un ressort (4) d'écartement de cliquets destiné à provoquer la mise des parties d'encliquetage (20c, 20c) des extrémités des cliquets (12, 13) de blocage de bobine en prise avec des roues d'encliquetage (8) formées aux parties périphériques externes (2a, 3a) des deux bobines (2, 3),
caractérisé en ce que les parties d'encliquetage (20c, 20c) formées aux extrémités sont ouvertes initialement plus largement qu'une plage normale, et
les deux cliquets (12, 13) de blocage de bobine sont tournés dans la plage normale simultanément afin que des organes d'arrêt (20f, 20f) du côté des cliquets, placés sur les cliquets (12, 13) de blocage de bobine, se déplacent au-dessus d'organes d'arrêt (11e, 11e) du côté du corps placés sur le corps (11) de blocage de bobines, si bien que, ensuite, bien que les bras (14d, 14e) d'encliquetage du ressort d'écartement de cliquets rappellent élastiquement les parties d'encliquetage (20c, 20c) des deux cliquets (12, 13) de blocage de bobine vers l'extérieur, les parties d'encliquetage (20c, 20c) sont maintenues dans la plage normale par coopération des organes d'arrêt (20f, 20f) du côté des cliquets avec les organes d'arrêt (11e, 11e) du côté du corps.
